# EUROPEAN PATENT APPLICATION

(11) **EP 4 711 124 A1**
(43) Date of publication of application: **18.03.2026**
(21) Application number: 25198975.2
(22) Date of filing: 29.08.2025
(51) Int. Cl.: B30B 1/32, B30B 15/00, H01M 10/04, B30B 15/16

(54) **SECONDARY BATTERY PRESSING METHOD AND PRESSING DEVICE SUPPORTING SAME**

(30) Priority: 10.09.2024 KR 20240122775
(71) Applicant: SAMSUNG SDI CO., LTD., Yongin-si, Gyeonggi-do 17084 (KR)
(72) Inventor: SEO, Myunghwan, 17084 Yongin-Si, Gyeonggi-do (KR); YANG, Jiho, 17084 Yongin-Si, Gyeonggi-do (KR); UHM, Jushik, 17084 Yongin-Si, Gyeonggi-do (KR); JEONG, Daeseong, 17084 Yongin-Si, Gyeonggi-do (KR)
(74) Representative: Bardehle Pagenberg Partnerschaft mbB Patentanwälte Rechtsanwälte

(57) **Abstract**

A pressing apparatus according to embodiments of the present disclosure may include a driver, a cylinder configured to move in response to driving of the driver, and a regulator configured to control an internal pressure of the cylinder, wherein the cylinder moves upwardly by a first distance in response to driving of the driver, and a portion of the cylinder is configured to move upwardly by a second distance in response to the internal pressure of the cylinder controlled by the regulator to provide a pressing force to at least a portion of a secondary battery.

## Description

The present application claims priority to and the benefit of Korean Patent Application No. 10-2024-0122775 filed on September 10, 2024, the entire contents of which is incorporated by reference.

### FIELD

The present disclosure relates to a secondary battery pressing method and a pressing apparatus supporting the same.

### BACKGROUND

Unlike primary batteries that are not designed to be (re)charged, secondary (or rechargeable) batteries are batteries that are designed to be discharged and recharged. Low-capacity secondary batteries are for example used in portable, small electronic devices, such as smart phones, feature phones, notebook computers, digital cameras, and camcorders, while large-capacity secondary batteries are for example widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Due to various factors, such as the geometry of a case of a secondary cell, the internal space constraints of the case, and/or the arrangement of electrode assemblies accommodated in the internal space of the case, electrode assemblies may be connected to electrode terminals based on separate conductive members. For example, each of electrode assemblies may be electrically connected to the corresponding electrode terminal through a conductive member welded to the electrode assembly and the electrode terminal.

In a welding process of an electrode assembly and a conductive member, a predetermined level of pressure may be applied to the electrode assembly to promote bond stability and/or minimize contact resistance. For example, the electrode assembly may be disposed between a pressing device and a jig to provide a pressure corresponding to the degree of upward movement of the pressing device. In other words, the height of the pressing device may be directly related to the intensity of the pressure applied to the electrode assembly, and adjusting the height of the pressing device by moving the pressing device up and/or down may be desired to control the pressure at a predetermined level. However, adjusting the height of this pressing device may increase the time taken for the welding process, and may also reduce the mass productivity of secondary battery manufacturing.

An objective of the present disclosure provides a secondary battery pressing method and a pressing apparatus supporting the same for solving the problems described above.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

In order to solve the technical problems, a pressing apparatus according to embodiments of the present disclosure may include a driver, a cylinder configured to move in response to driving of the driver, and a regulator configured to control an internal pressure of the cylinder.

According to embodiments of the present disclosure, the cylinder may move upwardly by a first distance in response to driving of the driver.

According to embodiments of the present disclosure, a portion of the cylinder may be configured to move upwardly by a second distance in response to the internal pressure of the cylinder controlled by the regulator to provide a pressing force to at least a portion of a secondary battery.

According to embodiments of the present disclosure, the portion of the cylinder may be configured to move upwardly by the second distance in a state where the upward movement by the first distance is completed.

According to embodiments of the present disclosure, the pressing apparatus may further include a controller electrically connected to the driver and the regulator.

According to embodiments of the present disclosure, the controller may be configured to transmit to the driver a first control signal associated with the driving of the driver so that the cylinder moves upwardly by the first distance and to transmit to the regulator a second control signal associated with the driving of the regulator so that the portion of the cylinder moves upwardly by the second distance.

According to embodiments of the present disclosure, the pressing apparatus may further include a sensor configured to measure the pressing force.

According to embodiments of the present disclosure, the pressing apparatus may further include a controller electrically connected to the driver, the regulator, and the sensor.

According to embodiments of the present disclosure, the controller may be configured to receive from the sensor a measurement value associated with the pressing force and transmit a third control signal associated with driving of the regulator based on the measurement value.

According to embodiments of the present disclosure, the controller may be configured to compare the measurement value with a reference value and based on a determination that the measurement value is less than the reference value, to transmit to the regulator the third control signal, the third control signal instructing the regulator to increase the internal pressure of the cylinder.

According to embodiments of the present disclosure, the controller may be configured to compare the measurement value with a reference value and based on a determination that the measurement value is greater than the reference value, to transmit to the regulator the third control signal, the third control signal instructing the regulator to decrease the internal pressure of the cylinder.

According to embodiments of the present disclosure, the pressing apparatus may further include a welding jig on which a collector is disposed.

According to embodiments of the present disclosure, at least a portion of the secondary battery may be in contact with the collector in response to the upward movement by the first distance of the cylinder.

According to embodiments of the present disclosure, the at least a portion of the secondary battery may be spaced apart from the collector by a separation distance less than the second distance in response to the upward movement by the first distance of the cylinder.

According to embodiments of the present disclosure, the at least a portion of the secondary battery may be welded to the collector in a state where the pressing force is provided by the portion of the cylinder.

According to embodiments of the present disclosure, the pressing apparatus may further include a die configured such that the at least a portion of the secondary battery is disposed thereon.

According to embodiments of the present disclosure, the pressing apparatus may further include a first guide member configured to guide movement of the die.

According to embodiments of the present disclosure, the pressing apparatus may further include a second guide member configured to guide movement of the cylinder.

According to embodiments of the present disclosure, the at least a portion of the secondary battery may include an electrode assembly.

According to embodiments of the present disclosure, the portion of the cylinder may include a piston.

In order to solve the technical problems, a secondary battery pressing method according to embodiments of the present disclosure may include moving a cylinder upwardly by a first distance by driving a driver and providing a pressing force to at least a portion of a secondary battery by moving a portion of the cylinder upwardly by a second distance according to an internal pressure of the cylinder controlled by a regulator.

According to embodiments of the present disclosure, the providing of the pressing force to the at least a portion of the secondary battery by the upward movement by the second distance may include moving a portion of the cylinder in a state where the upward movement by the first distance of the cylinder is completed.

According to embodiments of the present disclosure, the upwardly moving by the first distance may include transmitting, by a controller, a first control signal associated with the driving of the driver to the driver so that the cylinder moves upwardly by the first distance.

According to embodiments of the present disclosure, the providing of the pressing force to the at least a portion of the secondary battery by the upwardly moving by the second distance may include transmitting to the regulator, by the controller, a second control signal associated with driving of the regulator so that the portion of the cylinder moves upwardly by the second distance.

According to embodiments of the present disclosure, the secondary battery pressing method may further include receiving, by a controller, a measurement value associated with the pressing force from the sensor.

According to embodiments of the present disclosure, the secondary battery pressing method may further include based on a determination that the measurement value is less than a reference value, transmitting to the regulator, by the controller, a third control signal associated with driving of the regulator, the third control signal instructing the regulator to increase the internal pressure of the cylinder.

According to embodiments of the present disclosure, the secondary battery pressing method may further include based on a determination that the measurement value is greater than a reference value, transmitting to the regulator, by the controller, a third control signal associated with driving of the regulator, the third control signal instructing the regulator to decrease the internal pressure of the cylinder.

According to embodiments of the present disclosure, the upwardly moving by the first distance may include bringing the at least a portion of the secondary battery in contact with a collector disposed on a welding jig in response to the upward movement by the first distance of the cylinder or spacing the at least a portion of the secondary battery apart from the collector by a separation distance less than the second distance in response to the upward movement by the first distance of the cylinder.

According to embodiments of the present disclosure, the secondary battery pressing method may further include welding the at least a portion of the secondary battery to the collector disposed on a welding jig in a state where at least a portion of the secondary battery is provided with the pressing force by the portion of the cylinder.

According to embodiments of the present disclosure, the pressing method and the pressing apparatus supporting the same may provide a predetermined level of pressure to an electrode assembly while minimizing the process of adjusting the height of the pressing apparatus.

According to embodiments of the present disclosure, the pressing method and the pressing apparatus supporting the same may provide the same level of pressure to electrode assemblies even in a case of being manufactured electrode assemblies have a size deviation.

According to embodiments of the present disclosure, by minimizing the height adjustment process of the pressing apparatus, the time taken for the welding process of electrode assemblies may be reduced and the mass productivity of secondary battery manufacturing may be improved.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an example of a secondary battery according to embodiments of the present disclosure.
FIG. 2 illustrates an example of a cross-section of the secondary battery according to embodiments of the present disclosure.
FIG. 3 illustrates examples components of a pressing apparatus according to embodiments of the present disclosure.
FIG. 4 illustrates an example pressing device of the pressing apparatus according to embodiments of the present disclosure.
FIG. 5 illustrates an example welding jig device of the pressing apparatus according to embodiments of the present disclosure.
FIG. 6 illustrates an example of a first pressing process and a second pressing process of the pressing apparatus according to embodiments of the present disclosure.
FIG. 7 illustrates an example of a third pressing process of the pressing apparatus according to embodiments of the present disclosure.
FIG. 8 illustrates an example of a secondary battery pressing method according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way. The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, etc. may be used herein to describe various elements, these elements should not be limited by these terms. These terms are used to distinguish one element from another element. Thus, a first element discussed below could be termed a second element without departing from the teachings of example embodiments.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to be limiting of the present disclosure.

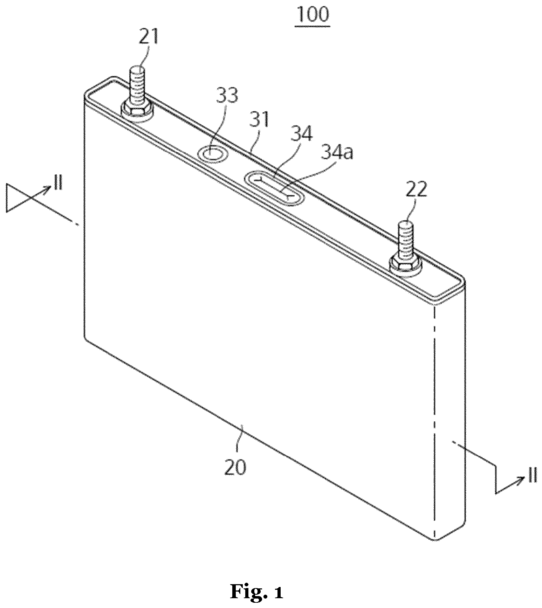

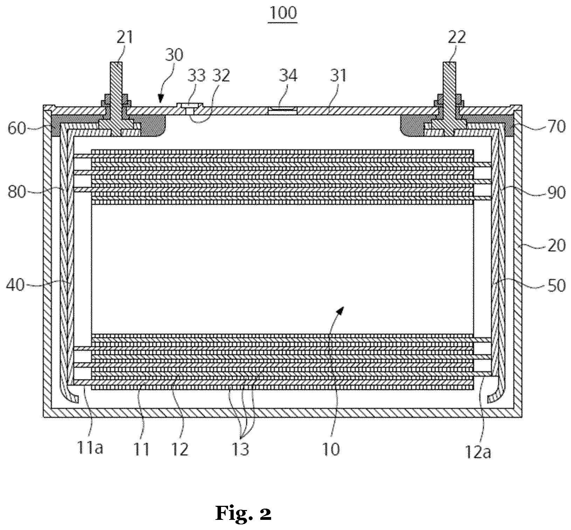

Hereinafter, a secondary method to which a secondary battery pressing method and a pressing apparatus supporting the same according to various embodiments of the present disclosure are applicable will be described with reference to FIGS. 1 and 2.

FIG. 1 illustrates an example of a secondary battery according to embodiments of the present disclosure. FIG. 2 illustrates an example of a cross-section of the secondary battery according to embodiments of the present disclosure. The cross-section of the secondary battery shown in FIG. 2 may be referred to as the cross-section takin in the direction of line II-II of FIG. 1.

Referring to FIGS. 1 and 2, the secondary battery 100 according to one or more embodiments may include at least one electrode assembly 10 wound with a separator 13 as an insulator between the positive electrode 11 and the negative electrode 12, a case 20 in which the electrode assembly 10 is received (or accommodated) therein, and a cap assembly 30 coupled to an opening of the case 20.

The secondary battery 100 according to one or more embodiments will now be described as an example of a prismatic lithium ion secondary battery. However, the present disclosure is not limited thereto, and suitable aspects, features and principles described herein may be applied to various other types of secondary batteries, such as lithium polymer secondary battery and/or cylindrical secondary battery.

Each of the positive electrode 11 and the negative electrode 12 may include a current collector made of a thin metal foil having a coated portion on which an active material is coated and an uncoated portion 11a, 12a on which an active material is not coated.

The positive electrode 11 and the negative electrode 12 are wound after interposing the separator 13, which is an insulator, therebetween. However, the present disclosure is not limited thereto, and the electrode assembly 10 may have a structure in which a positive electrode 11 and a negative electrode 12, each made of a plurality of sheets, are alternately stacked with a separator interposed therebetween.

The case 20 may form the overall outer appearance of the secondary battery 100 and may be made of a conductive metal, such as aluminum, aluminum alloy, or nickel-plated steel. In addition, the case 20 may provide a space in which the electrode assembly 10 is accommodated.

The cap assembly 30 may include a cap plate 31 covering an opening in the case 20, and the case 20 and the cap plate 31 may be made of a conductive material. The positive and negative electrode terminals 21 and 22 electrically connected to the positive electrode 11 and the negative electrode 12, respectively, may be installed to penetrate (or extend through) the cap plate 31 and protrude outwardly therethrough.

In addition, outer peripheral surfaces (e.g., circumferential surfaces) of upper pillars of the positive and negative electrode terminals 21 and 22 protruding outwardly from the cap plate 31 may be threaded and may be fixed to the cap plate 31 by utilizing nuts. However, the present disclosure is not limited thereto, and the positive and negative electrode terminals 21 and 22 may have a rivet structure and may be riveted or welded to the cap plate 31.

In addition, the cap plate 31 may be made of a thin plate and may be coupled to the opening in the case 20, and an electrolyte injection port 32 into which a sealing stopper 33 may be installed may be located (e.g., formed) in the cap plate 31, and a vent portion 34 having a notch 34a may be installed.

The positive and negative electrode terminals 21 and 22 may be electrically connected to current collectors including first and second current collectors 40 and 50 (hereinafter referred to as positive and negative current collectors) by being bonded or coupled (e.g., by welding) to the positive uncoated portion 11a and the negative electrode uncoated portion 12a, respectively. For example, the positive and negative electrode terminals 21 and 22 may be coupled by welding to the positive and negative electrode current collectors 40 and 50, respectively. However, the present disclosure is not limited thereto, and the positive and negative electrode terminals 21 and 22 and the positive and negative electrode current collectors 40 and 50 may be integrally formed in one or more embodiments.

In addition, an insulation member may be installed between the electrode assembly 10 and the cap plate 31. The insulation member may include first and second lower insulation members 60 and 70, and each of the first and second lower insulation members 60 and 70 may also have a portion located between the electrode assembly 10 and the cap plate 31.

In addition, according to one or more embodiments of the present disclosure, one end of a separation member may face one side of the electrode assembly 10 and may be installed between the insulation member and the positive or negative electrode terminals 21 and 22. In one or more embodiments, the separation member may include first and second separation members 80 and 90.

In such embodiments, first ends of the first and second separation members 80 and 90 installed to face one side of the electrode assembly 10 may be respectively installed between the first and second lower insulation members 60 and 70 and the positive and negative electrode terminals 21 and 22.

Accordingly, the positive and negative electrode terminals 21 and 22, which may be coupled by welding to the positive and negative electrode current collectors 40 and 50, may be coupled to first ends of the first and second lower insulation members 60 and 70 and the first and second separation members 80 and 90.

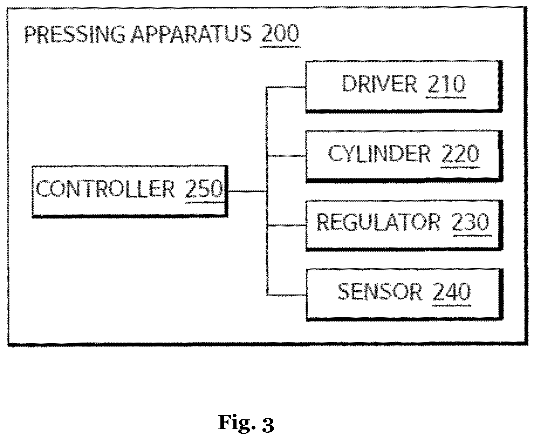

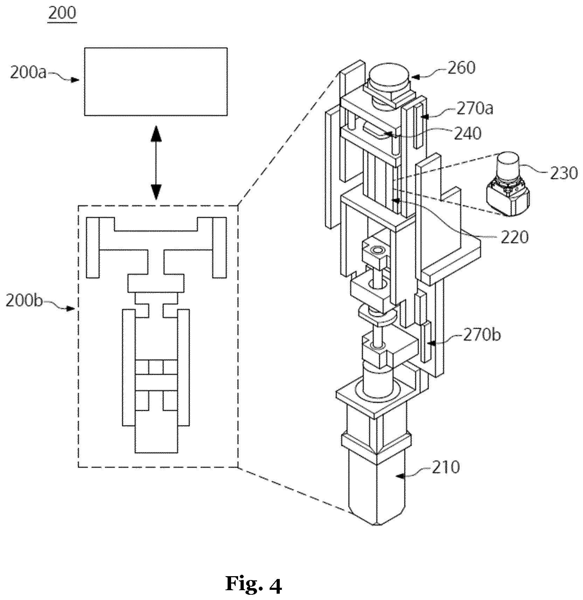

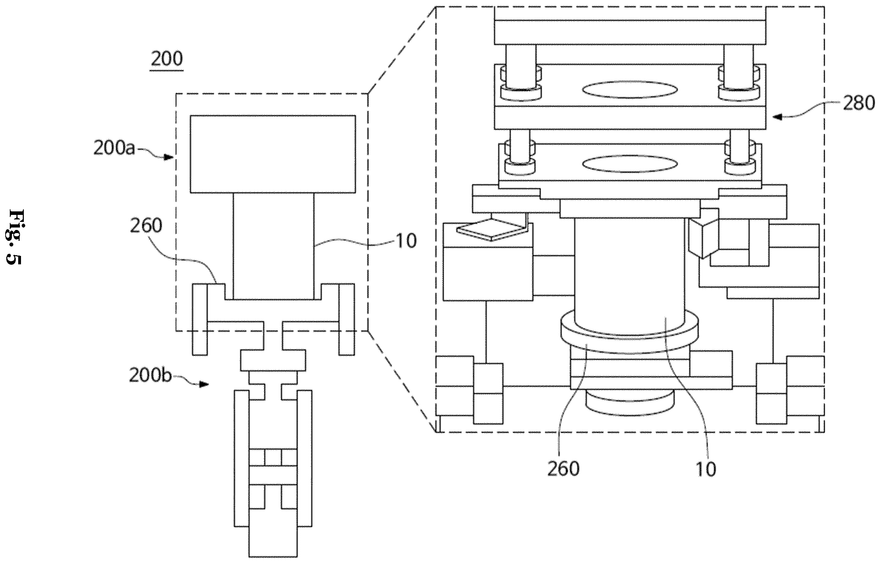

FIG. 3 illustrates examples components of a pressing apparatus according to embodiments of the present disclosure. Referring to FIG. 3, a pressing apparatus 200 according to embodiments may include a driver 210, a cylinder 220, a regulator 230, a sensor 240, and a controller 250. According to various embodiments, the pressing apparatus 200 may omit at least some of the components described above, or may further include other components. For example, the pressing apparatus 200 may further include at least one component described later with reference to FIGS. 4 and/or 5.

In embodiments, the driver 210 may be driven to support the movement (e.g., up and down linear movement) of the cylinder 220 in response to a control signal. For example, the driver 210 may support at least a portion of the cylinder 220 or be coupled to at least a portion of the cylinder 220. The driver 210 may also cause the cylinder 220 to move upwardly or downwardly based on the driving. In various embodiments, the driver 210 may be implemented in various types that may support the movement of the cylinder 220. For example, the driver 210 may include at least one of a servo motor, a stepper motor, a DC motor, a separate cylinder distinct from the cylinder 220, a cam, an actuator, and a robot, but the type or structure thereof is not limited.

In embodiments, the cylinder 220 may be moved by the driving of the driver 210. For example, the cylinder 220 may be moved upwardly by a corresponding displacement or moved downwardly by a corresponding displacement in response to the driving of the driver 210.

In embodiments, the cylinder 220 may include a piston moveably disposed in the internal space. According to embodiments, the piston may move along a piston rod provided in the internal space of the cylinder 220 such that at least a portion of the piston rod is exposed to the outside of the cylinder 220, and the stroke (or displacement) of the piston may be determined by the level of pressure (e.g., pneumatic or hydraulic pressure) of fluid provided (or supplied) to the internal space of the cylinder 220.

In embodiments, the regulator 230 may support mechanical movement (e.g., up and down linear movement) of the piston disposed in the internal space of the cylinder 220. For example, the regulator 230 may be coupled to at least a portion of the cylinder 220 or configured as at least a portion of the cylinder 220. The regulator 230 may supply fluid at a corresponding pressure level into the internal space of the cylinder 220 such that the piston in the internal space of the cylinder 220 is moved by a specified stroke by the pressure of the fluid. In various embodiments, the regulator 230 may include a pneumatic regulator to control the pressure of air or a hydraulic regulator to control the pressure of oil.

In embodiments, the sensor 240 may detect the condition of an object being targeted by the pressing apparatus 200. For example, the sensor 240 may measure a pressing force applied to the target object by the driving of the pressing apparatus 200. In embodiments, the sensor 240 may operate in response to a control signal to measure the pressing force applied to the target object and generate a data value (e.g., a pressing force measurement value) or an electrical signal corresponding to the measured pressing force. In various embodiments, the sensor 240 may include a load cell, but is not limited thereto in the present disclosure. For example, the sensor 240 may include various types of sensors that may measure the intensity of the pressure applied to the target object by the pressing apparatus 200.

In embodiments, the controller 250 may be electrically connected to at least one other component of the pressing apparatus 200 to control the component, and may perform various data processing. For example, the controller 250 may include internal memory and may execute instructions (e.g., programming language code) stored in that memory to perform overall control over the function and/or operation of the at least one component of the pressing apparatus 200. According to various embodiments, the controller 250 may be configured internally or externally to the pressing apparatus 200 and may include a general purpose processor, a microprocessor, a central processing unit (CPU), a digital signal processor (DSP), a controller, or a microcontroller.

FIG. 4 illustrates an example pressing device of the pressing apparatus according to embodiments of the present disclosure. FIG. 5 illustrates an example welding jig device of the pressing apparatus according to embodiments of the present disclosure. Referring to FIGS. 4 and 5, the pressing apparatus 200 according to embodiments may include a first part including a welding jig device 200a and a second part including a pressing device 200b. In various embodiments, the first part and the second part may be configured independently and separately, or may be provided as an integral structure with at least portions thereof coupled. In embodiments, the pressing apparatus 200 may use the pressing device 200b of the second part to apply a pressing force to a target object, and may use the welding jig module 200a of the first part to perform welding on at least a portion of the target object while holding the target object under pressure.

In embodiments, the pressing device 200b of the second part may further include, in addition to the driver 210, the cylinder 220, the regulator 230, and the sensor 240 described above with reference to FIG. 3, at least one of a die 260, a first guide member 270a, and a second guide member 270b.

In embodiments, a target object to be pressed by the pressing device 200b may be disposed on (or fixed to) the die 260. According to embodiments, the target object disposed on the die 260 may include at least a portion of a secondary battery (e.g., the secondary battery 100 of FIGS. 1 and 2), such as an electrode assembly of the secondary battery 100 (e.g., the electrode assembly 10 of FIG. 2), but the present disclosure is not limited thereto. For example, the target object disposed on the die 260 may include various parts or components of the secondary battery 100 to which pressure welding may be performed. Hereinafter, the electrode assembly 10 of the secondary battery 100 will be described as an example of the target object to be pressure welded by the pressing apparatus 200, but it should be understood that the electrode assembly 10 may be modified variously.

In embodiments, the die 260 may be connected to (or coupled to) the piston of the cylinder 220 to be moved upwardly or downwardly in response to the movement of the cylinder 220 by the driving of the driver 210. The die 260 may also be moved upwardly or downwardly from the position to which the die 260 is moved upwardly or downwardly, in response to the movement of the piston of the cylinder 220 driven by a pressure level of fluid supplied to the internal space of the cylinder 220. Based on the above, the die 260 may move upwardly or downwardly in response to the movement of the cylinder 220 itself, and may be further moved upwardly or downwardly in response to the movement of the piston of the cylinder 220 at that position.

In embodiments, the first guide member 270a and the second guide member 270b may support the movement of some components of the pressing device 200b. For example, the first guide member 270a may guide the movement of the cylinder 220 and/or the upward or downward movement of the die 260 correspondingly in response to the movement of the piston of the cylinder 220. In addition, the second guide member 270b may guide the movement of the cylinder 220 that moves in response to the driving of the driver 210. According to various embodiments, at least one of the first guide member 270a and the second guide member 270b may be omitted.

In embodiments, the welding jig device 200a of the first part may perform welding on the electrode assembly 10 disposed on the die 260 of the pressing device 200b. In this regard, the welding jig device 200a may be fixed in position and may include a welding jig 280 configured to fix the electrode assembly 10 on the die 260 that is moved upwardly.

Although not shown, according to embodiments, a conductive member to be welded to the electrode assembly 10 may be disposed between the electrode assembly 10 on the die 260, which is moved upwardly, and the welding jig 280. In various embodiments, the conductive member to be welded to the electrode assembly 10 may include at least a portion of the secondary battery 100, such as a collector of the secondary battery 100 (e.g., the first collector 40 or the second collector 50 of FIG. 2), but the present disclosure is not limited thereto. Hereinafter, the collector 40 or 50 of the secondary cell 100 is described as an example of a conductive member welded to the electrode assembly 10, but the collector 40 or 50 may be changed to other members of various functions or uses having conductive properties.

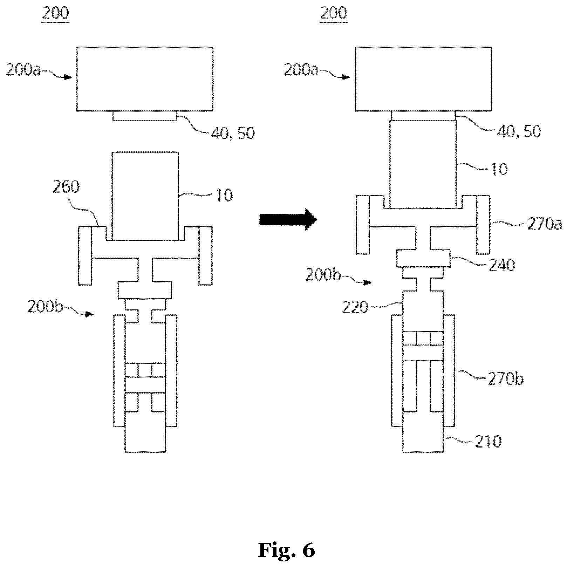

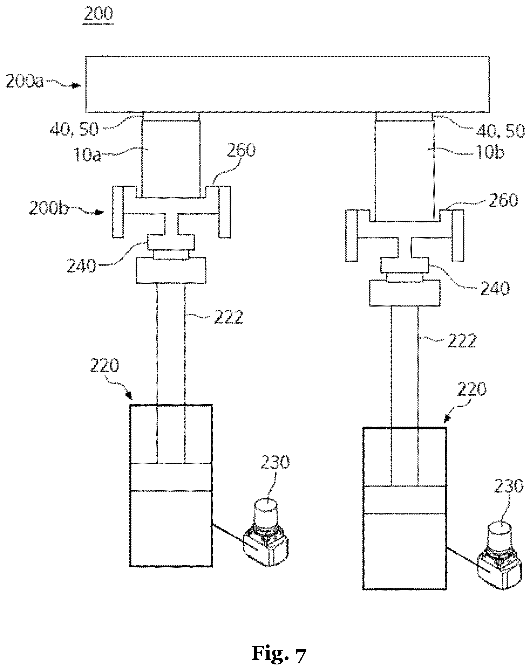

FIG. 6 illustrates an example of a first pressing process and a second pressing process of the pressing apparatus according to embodiments of the present disclosure. FIG. 7 illustrates an example of a third pressing process of the pressing apparatus according to embodiments of the present disclosure. Referring to FIG. 6, in the first pressing process of the pressing apparatus 200 according to embodiments, the electrode assembly 10 corresponding to a target object to be pressed may be disposed on the die 260 of the pressing device 200b. In addition, the collector 40 or 50, which is the conductive object to be welded to at least a portion of the electrode assembly 10 to be pressed, may be disposed on the welding jig device 200a. For example, the collector 40 or 50 may be vacuum drawn to and disposed on the bottom surface (e.g., the surface facing the electrode assembly 10 disposed on the die 260) of the welding jig (e.g., the welding jig 280 of FIG. 5) of the welding jig device 200a.

According to embodiments, in the second pressing process of the pressing apparatus 200, the cylinder 220 may be moved upward as the driver 210 of the pressing device 200b is driven. For example, the cylinder 220 may be guided by the second guide member 270b to move upwardly by a first distance (or height). In this regard, the controller (e.g., the controller 250 of FIG. 3) may generate and transmit a first control signal to the driver 210 so that the cylinder 220 moves upwardly by the first distance in response to the driving of the driver 210.

In embodiments, the first distance (or height) that the cylinder 220 travels may be set by taking into account the size of the electrode assembly 10 disposed on the die 260. For example, the electrode assembly 10 may be subject to dimensional tolerances in the manufacturing process, and the first distance may be set to a distance by taking into account the dimensional tolerances such that in a case where a maximum size electrode assembly 10 subject to a specified tolerance (e.g., about +0.2 mm to -0.2 mm) is disposed on the die 260 that moves upwardly in response to the movement of the cylinder 220, at least a portion of the electrode assembly 10 may contact the collector 40 or 50 disposed in the welding jig 280. Based on the above, in response to the movement of the cylinder 220, the die 260 connected to the piston of the corresponding cylinder 220 may be guided by the first guide member 270a to move upwardly, and at least a portion of the electrode assembly 10 disposed on the die 260 may come into contact with the collector 40 or 50 disposed on the welding jig 280.

Referring to FIG. 7, in the third pressing process of the pressing apparatus 200 according to embodiments, fluid (e.g., air or oil) at a predetermined pressure level may be supplied to the internal space of the cylinder 220 by driving the regulator 230, and the piston 222 of the cylinder 220 may be moved upwardly by a second distance (or height or stroke) in response to the pressure level of the fluid. In this regard, the controller 250 may generate and transmit a second control signal to the regulator 230 that controls the pressure in the internal space of the cylinder 220 so that the piston 222 of the cylinder 220 moves upwardly by the second distance in response to the fluid at the predetermined pressure level.

According to embodiments, in the second pressing process, a pressure resulting from the upward movement of the die 260 connected to the piston 222 of the cylinder 220 may be provided to the electrode assembly 10b, at least a portion of which is in contact with the collector 40 or 50.

In embodiments, the second distance by which the piston 222 of the cylinder 220 travels may be set by taking into account the size of the electrode assembly disposed on the die 260. For example, the second distance may be set to a distance (e.g., about 2 mm) that may cover the separation distance between the electrode assembly 10a and the collector 40 or 50 disposed on the welding jig 280 that occurs in the second pressing process in a case where the electrode assembly 10a of the smallest size according to a specified tolerance (e.g., about + 0.2 mm to -0.2 mm) is disposed on the die 260 that moves upwardly in response to the movement of the cylinder 220. In addition, the internal space pressure of the cylinder 220 controlled by the regulator 230 may be set to a strength capable of moving the piston 222 of the cylinder 220 by the second distance.

Based on the above, even in a case where an electrode assembly having any size within the tolerance range is disposed on the die 260, the electrode assembly may be provided with pressure in response to the upward movement of the piston 222 while in contact with the collector 40 or 50 disposed in the welding jig 280, or may be provided with pressure in response to the upward movement of the piston 222 while spaced apart from the collector 40 or 50 disposed on the welding jig 280. In addition, the intensity of the pressure applied to the electrode assembly may correspond to a specific pressure level of the fluid supplied to the internal space of the cylinder 220 to drive the piston 222 upwardly, and thus a uniform intensity of pressure may be provided for electrode assemblies of different sizes.

In embodiments, the controller 250 may obtain data values associated with the electrode assembly 10a or 10b pressed by the pressing device 200b. For example, the controller 250 may receive a pressing force measurement value for the electrode assembly 10a or 10b from the sensor 240, and may generate a third control signal based on that data value. In embodiments, the controller 250 may compare the data value received from the sensor 240 to a reference value representative of a predetermined (or target) pressing force for the electrode assembly 10a or 10b, and may generate the third signal based on the result of the comparison. For example, in a case where it is determined that the data value received from the sensor 240 is less than the reference value, the controller 250 may generate and transmit a third control signal to the regulator 230, the third control signal instructing the regulator 230 to increase the pressure level of the fluid supplied to the internal space of the cylinder 220. In such a case, the piston 222 of the cylinder 220 may be further moved upwardly by the higher pressure level in the internal space of the cylinder 220 controlled by the regulator 230, and the intensity of the pressure applied to the electrode assembly 10a or 10b may be increased. In another example, in a case where it is determined that the data value received from the sensor 240 is greater than the reference value, the controller 250 may generate and transmit a third control signal to the regulator 230, the third control signal instructing the pressure level of the fluid supplied to the internal space of the cylinder 220 to decrease. In such a case, the piston 222 of the cylinder 220 may be moved downwardly as the pressure level of the fluid in the internal space of the cylinder 220 is lowered, and the intensity of the pressure applied to the electrode assembly 10a or 10b may be reduced.

According to embodiments, the electrode assembly 10a or 10b may be welded to the collector 40 or 50 by the welding jig device 200a while being provided with pressure from the pressing device 200b. For example, the electrode assembly 10a or 10b may be welded to the collector 40 or 50 by the welding jig device 200a which performs at least one of laser welding, resistance welding, ultrasonic welding, and plasma welding.

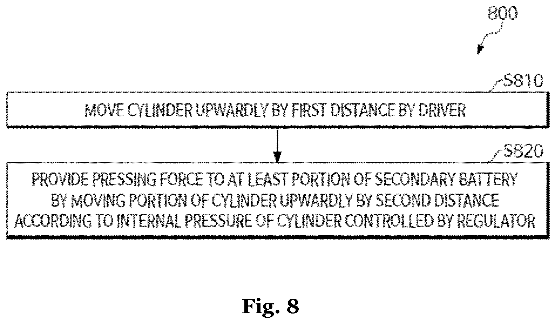

FIG. 8 illustrates an example of a secondary battery pressing method according to embodiments of the present disclosure. Hereinafter, the operations of the secondary battery pressing method 800 referred to in the embodiment of FIG. 8 may be performed sequentially or non-sequentially. For example, the order of the operations referred to in the embodiment of FIG. 8 may be changed, or at least two operations may be performed in parallel.

Referring to FIG. 8, in operation S810, the cylinder (e.g., the cylinder 220 of FIG. 3) may be moved upwardly by a first distance by the driver (e.g., the driver 210 of FIG. 3) according to embodiments. For example, the controller (e.g., the controller 250 of FIG. 3) may generate and transmit a first control signal to the driver 210 so that the cylinder moves upwardly by the first distance in response to the driving of the driver 210, and the driver 210 may drive based on the first control signal to move the cylinder 220 upwardly.

In embodiments, a die (e.g., the die 260 of FIG. 6) connected (or coupled) to a piston (e.g., the piston 222 of FIG. 7) of the cylinder 220 may be moved upwardly in response to the first upward movement of the cylinder 220. In addition, at least a portion of the electrode assembly (e.g., the electrode assembly 10 of FIG. 6) disposed on the die 260 may be in contact with, or spaced apart from, a vacuum-drawn collector (e.g., the collector 40 or 50 of FIG. 6) on a welding jig (e.g., the welding jig 280 of FIG. 5).

In operation S820, in response to the internal pressure of the cylinder 220 controlled by a regulator (e.g., the regulator 230 of FIG. 3) according to embodiments, a portion of the cylinder 220 (e.g., the piston 222) may be caused to move upwardly by a second distance to provide a pressing force to at least a portion of the secondary cell (e.g., the electrode assembly 10). For example, the controller 250 may generate and transmit a second control signal to the regulator 230 so that the piston 222 of the cylinder 220 is moved upwardly by the second distance by a fluid at a specific pressure level supplied to the internal space of the cylinder 220. In embodiments, the regulator 230 may supply the internal space of the cylinder 220 with a fluid at a pressure level capable of moving the piston 222 by the second distance based on the second control signal, and the piston 222 may be moved upwardly by the fluid at that pressure level. In addition, the die 260 connected to the piston 222 may be moved upwardly in response to the movement of the piston 222, in which case the electrode assembly 10 disposed on the die 260 may be provided with pressure while in contact with the collector 40 or 50. In embodiments, the electrode assembly 10 may be welded to the collector 40 or 50 while under pressure.

Although the present disclosure has been described with reference to embodiments and drawings illustrating aspects thereof, the present disclosure is not limited thereto. Various modifications and variations can be made by a person skilled in the art to which the present disclosure belongs within the scope of the technical scope of the present disclosure and the claims and their equivalents, below.

The present disclosure additionally includes the following numbered embodiments:
1. A pressing apparatus comprising:
   a driver;
   a cylinder configured to move in response to driving of the driver; and
   a regulator configured to control an internal pressure of the cylinder,
   wherein the cylinder moves upwardly by a first distance in response to driving of the driver, and
   a portion of the cylinder is configured to move upwardly by a second distance in response to the internal pressure of the cylinder controlled by the regulator to provide a pressing force to at least a portion of a secondary battery.
2. The pressing apparatus according to embodiment 1, wherein the portion of the cylinder is configured to move upwardly by the second distance in a state where the upward movement by the first distance is completed.
3. The pressing apparatus according to embodiment 1 or 2, further comprising a controller electrically connected to the driver and the regulator,
   wherein the controller is configured to:
   transmit to the driver a first control signal associated with the driving of the driver so that the cylinder moves upwardly by the first distance; and
   transmit to the regulator a second control signal associated with the driving of the regulator so that the portion of the cylinder moves upwardly by the second distance.
4. The pressing apparatus according to one of embodiments 1 to 3, further comprising a sensor configured to measure the pressing force.
5. The pressing apparatus according to embodiment 4, further comprising a controller electrically connected to the driver, the regulator, and the sensor,
   wherein the controller is configured to:
   receive from the sensor a measurement value associated with the pressing force; and
   transmit a third control signal associated with driving of the regulator based on the measurement value.
6. The pressing apparatus according to embodiment 5, wherein the controller is configured to:
   compare the measurement value with a reference value; and
   based on a determination that the measurement value is less than the reference value, transmit to the regulator the third control signal, the third control signal instructing the regulator to increase the internal pressure of the cylinder.
7. The pressing apparatus according to embodiment 5, wherein the controller is configured to:
   compare the measurement value with a reference value; and
   based on a determination that the measurement value is greater than the reference value, transmit to the regulator the third control signal, the third control signal instructing the regulator to decrease the internal pressure of the cylinder.
8. The pressing apparatus according to one of embodiments 1 to 7, further comprising a welding jig on which a collector is disposed,
   wherein the at least a portion of the secondary battery is in contact with the collector in response to the upward movement by the first distance of the cylinder.
9. The pressing apparatus according to one of embodiments 1 to 7, further comprising a welding jig on which a collector is disposed,
   wherein the at least a portion of the secondary battery is spaced apart from the collector by a separation distance less than the second distance in response to the upward movement by the first distance of the cylinder.
10. The pressing apparatus according to one of embodiments 1 to 7, further comprising a welding jig on which a collector is disposed,
   wherein the at least a portion of the secondary battery is welded to the collector in a state where the pressing force is provided by the portion of the cylinder.
11. The pressing apparatus according to one of embodiments 1 to 10, further comprising:
   a die configured such that the at least a portion of the secondary battery is disposed thereon;
   a first guide member configured to guide movement of the die; and
   a second guide member configured to guide movement of the cylinder.
12. The pressing apparatus according to one of embodiments 1 to 11, wherein the at least a portion of the secondary battery comprises an electrode assembly.
13. The pressing apparatus according to one of embodiments 1 to 12, wherein the portion of the cylinder comprises a piston.
14. A secondary battery pressing method comprising:
   moving a cylinder upwardly by a first distance by driving a driver; and
   providing a pressing force to at least a portion of a secondary battery by moving a portion of the cylinder upwardly by a second distance according to an internal pressure of the cylinder controlled by a regulator.
15. The secondary battery pressing method according to embodiment 14, wherein the providing of the pressing force to the at least a portion of the secondary battery by the upward movement by the second distance comprises moving a portion of the cylinder in a state where the upward movement by the first distance of the cylinder is completed.
16. The secondary battery pressing method according to embodiment 14 or 15, wherein the upwardly moving by the first distance comprises transmitting to the driver, by a controller, a first control signal associated with the driving of the driver so that the cylinder moves upwardly by the first distance, and
   the providing of the pressing force to the at least a portion of the secondary battery by the upwardly moving by the second distance comprises transmitting to the regulator, by the controller, a second control signal associated with driving of the regulator so that the portion of the cylinder moves upwardly by the second distance.
17. The secondary battery pressing method according to one of embodiments 14 to 16, further comprising:
   receiving, by a controller, a measurement value associated with the pressing force from the sensor; and
   based on a determination that the measurement value is less than a reference value, transmitting to the regulator, by the controller, a third control signal associated with driving of the regulator, the third control signal instructing the regulator to increase the internal pressure of the cylinder.
18. The secondary battery pressing method according to one of embodiments 14 to 16, further comprising:
   receiving, by a controller, a measurement value associated with the pressing force from the sensor; and
   based on a determination that the measurement value is greater than a reference value, transmitting to the regulator, by the controller, a third control signal associated with driving of the regulator, the third control signal instructing the regulator to decrease the internal pressure of the cylinder.
19. The secondary battery pressing method according to one of embodiments **14** to 18, wherein the upwardly moving by the first distance comprises:
   bringing the at least a portion of the secondary battery in contact with a collector disposed on a welding jig in response to the upward movement by the first distance of the cylinder; or
   spacing the at least a portion of the secondary battery apart from the collector by a separation distance less than the second distance in response to the upward movement by the first distance of the cylinder.
20. The secondary battery pressing method according to one of embodiments **14** to 19, further comprising welding the at least a portion of the secondary battery to the collector disposed on a welding jig in a state where at least a portion of the secondary battery is provided with the pressing force by the portion of the cylinder.

## Claims

1. A pressing apparatus (200) comprising:
a driver (210);
a cylinder (220) configured to move in response to driving of the driver (210); and
a regulator (230) configured to control an internal pressure of the cylinder (220),
wherein the cylinder (220) moves upwardly by a first distance in response to driving of the driver (210), and
a portion of the cylinder (220) is configured to move upwardly by a second distance in response to the internal pressure of the cylinder (220) controlled by the regulator (230) to provide a pressing force to at least a portion of a secondary battery.

2. The pressing apparatus (200) as claimed in claim 1, wherein the portion of the cylinder (220) is configured to move upwardly by the second distance in a state where the upward movement by the first distance is completed.

3. The pressing apparatus (200) as claimed in claim 1 or 2, further comprising a controller (250) electrically connected to the driver (210) and the regulator (230),
wherein the controller (250) is configured to:
transmit to the driver a first control signal associated with the driving of the driver (210) so that the cylinder (220) moves upwardly by the first distance; and
transmit to the regulator (230) a second control signal associated with the driving of the regulator (230) so that the portion of the cylinder (220) moves upwardly by the second distance.

4. The pressing apparatus (200) according to one of claims 1 to 3, further comprising a sensor (240) configured to measure the pressing force and a controller (250) electrically connected to the driver (210), the regulator (230), and the sensor (240),
wherein the controller (250) is configured to:
receive from the sensor (240) a measurement value associated with the pressing force; and
transmit a third control signal associated with driving of the regulator (230) based on the measurement value.

5. The pressing apparatus (200) as claimed in claim 4, wherein the controller (250) is configured to:
compare the measurement value with a reference value; and
based on a determination that the measurement value is less than the reference value, transmit to the regulator (230) the third control signal, the third control signal instructing the regulator (230) to increase the internal pressure of the cylinder (220).

6. The pressing apparatus (200) as claimed in claim 4, wherein the controller (250) is configured to:
compare the measurement value with a reference value; and
based on a determination that the measurement value is greater than the reference value, transmit to the regulator (230) the third control signal, the third control signal instructing the regulator (230) to decrease the internal pressure of the cylinder (220).

7. The pressing apparatus (200) according to one of claims 1 to 6, further comprising a welding jig (280) on which a collector (40, 50) is disposed,
wherein the at least a portion of the secondary battery (100) is in contact with the collector (40, 50) in response to the upward movement by the first distance of the cylinder (220).

8. The pressing apparatus (200) according to one of claims 1 to 6, further comprising a welding jig (280) on which a collector (40, 50) is disposed,
wherein the at least a portion of the secondary battery (100) is spaced apart from the collector (40, 50) by a separation distance less than the second distance in response to the upward movement by the first distance of the cylinder (220).

9. The pressing apparatus (200) according to one of claims 1 to 8, further comprising:
a die (260) configured such that the at least a portion of the secondary battery (100) is disposed thereon;
a first guide member (270a) configured to guide movement of the die (260); and
a second guide member (270b) configured to guide movement of the cylinder (220).

10. A secondary battery (100) pressing method comprising:
moving (S810) a cylinder (220) upwardly by a first distance by driving a driver (210); and
providing (S820) a pressing force to at least a portion of a secondary battery (100) by moving a portion of the cylinder (220) upwardly by a second distance according to an internal pressure of the cylinder (220) controlled by a regulator (230).

11. The secondary battery (100) pressing method as claimed in claim 10, wherein the providing of the pressing force to the at least a portion of the secondary battery by the upward movement by the second distance comprises moving a portion of the cylinder (220) in a state where the upward movement by the first distance of the cylinder (220) is completed.

12. The secondary battery (100) pressing method as claimed in claim 10 or 11, wherein the upwardly moving by the first distance comprises transmitting to the driver (210), by a controller (250), a first control signal associated with the driving of the driver (210) so that the cylinder (220) moves upwardly by the first distance, and
the providing of the pressing force to the at least a portion of the secondary battery (100) by the upwardly moving by the second distance comprises transmitting to the regulator (230), by the controller (250), a second control signal associated with driving of the regulator (230) so that the portion of the cylinder (220) moves upwardly by the second distance.

13. The secondary battery (100) pressing method according to one of claims 10 to 12, further comprising:
receiving, by a controller (250), a measurement value associated with the pressing force from the sensor (240); and
based on a determination that the measurement value is less than a reference value, transmitting to the regulator (230), by the controller (250), a third control signal associated with driving of the regulator (230), the third control signal instructing the regulator to increase the internal pressure of the cylinder (220).

14. The secondary battery (100) pressing method according to one of claims 10 to 12, further comprising:
receiving, by a controller (250), a measurement value associated with the pressing force from the sensor (240); and
based on a determination that the measurement value is greater than a reference value, transmitting to the regulator (230), by the controller, a third control signal associated with driving of the regulator, the third control signal instructing the regulator to decrease the internal pressure of the cylinder (220).

15. The secondary battery (100) pressing method according to one of claims 10 to 14, wherein the upwardly moving by the first distance comprises:
bringing the at least a portion of the secondary battery in contact with a collector (40, 50) disposed on a welding jig (280) in response to the upward movement by the first distance of the cylinder (220); or
spacing the at least a portion of the secondary battery (100) apart from the collector (250) by a separation distance less than the second distance in response to the upward movement by the first distance of the cylinder (220).
